# EUROPÄISCHE PATENTANMELDUNG

(11) **EP 0 759 356 A2**
(43) Veröffentlichungstag der Anmeldung: **26.02.1997**
(21) Anmeldenummer: 96113447.5
(22) Anmeldetag: 22.08.1996
(51) Int. Cl.: B29D 30/70, B29D 30/24

(54) **Verfahren zur Herstellung eines Fahrzeugluftreifens und Gürteltrommel zum Aufbau von Gürtellagen**

(30) Priorität: 23.08.1995 DE 19530940
(71) Anmelder: Continental Aktiengesellschaft, 30165 Hannover (DE)
(72) Erfinder: Pakur, Henryk, 31675 Bückeburg (DE); Glinz, Michael, 31535 Neustadt (DE)

(57) **Zusammenfassung**

Verfahren zur Herstellung eines Fahrzeugluftreifens mit Radialkarkasse, mit darauf aufgebautem Gürtel mit zumindest einer Gürtellage aus in Kautschuk eingebetteten Festigkeitsträgern und mit einer profilierten Lauffläche mit Profilumfangsrillen,
- bei dem zunächst jede Gürtellage (11, 13) im axialen Bereich zumindest einer Profilumfangsrille (12) mit einem größeren Durchmesser als in den anderen axialen Bereichen ausgebildet wird,
- bei dem danach um die radial äußere Gürtellage mit Bandagematerial (14) mit im wesentlichen in Umfangsrichtung angeordneten parallelen Festigkeitsträgern bandagiert und danach der Laufstreifen radial außerhalb des Bandagematerials (1) aufgelegt wird,
- und bei dem danach der aus zumindest einer Radialkarkasse, zwei Seitenteilen, dem Gürtel, der Gürtelbandage und dem Laufstreifen gebildete Reifenrohling in der Formpresse profiliert und vulkanisiert wird.

## Beschreibung

Die Erfindung betrifft ein Verfahren zur Herstellung eines Fahrzeugluftreifens mit einer Radialkarkasse und darauf aufgebautem Gürtel mit zumindest einer Gürtellage aus in Kautschuk eingebetteten parallel im spitzen Winkel zur Reifenumfangsrichtung angeordneten Festigkeitsträgern, mit einer profilierten Lauffläche mit darin ausgebildeten Profilumfangsrillen und eine Gürteltrommel zum Aufbau von Gürtellagen eines Fahrzeugluftreifens mit Gürtel- und Radialkarkasse.

Es ist üblich, einen Fahrzeugluftreifen in einem zweistufigen Verfahren herzustellen. Dabei wird in einer ersten Stufe das Karkassenpaket mit Seitenwänden auf einer Karkasstrommel aufgebaut. In einer zweiten Stufe werden auf einer zylindrischen Gürteltrommel eine oder mehrere Gürtellagen, die sich über den Umfang der Trommel erstrecken, radial übereinander aufgebaut. Die Gürtellagen bestehen aus in Kautschuk eingebetteten Festigkeitsträgern, beispielsweise Stahlcorden, die innerhalb einer Lage parallel zueinander angeordnet und im spitzen Winkel zur Umfangsrichtung ausgerichtet sind. Radial außerhalb der äußersten Gürtellage werden Bandagestreifen entweder in Form von einzelnen parallelen Bandagestreifen mit parallel zueinander angeordneten im wesentlichen in Umfangsrichtungausgerichteten Festigkeitsträgern, beispielsweise mit Nyloncorden, um den Gürtel herumgewickelt. Radial außerhalb der Bandage wird ein Laufstreifen, der sich über die gesamte Umfangslänge der Bandagestreifen erstreckt, aufgelegt.

Das so gebildete Gürtelpaket wird in solchen Verfahren konzentrisch radial außerhalb des Karkassenpaketes über dieses geschoben. Durch Bombage wird das Karkassenpaket radial nach außen gedehnt und mit dem Gürtelpaket verbunden. In der Vulkanisationspresse erfährt der so aus Gürtelpaket und Karkassenpaket gebildete Reifenrohling eine Resterhebung, wodurch der Laufstreifen in die profilierte Form gepreßt wird und das Reifenprofil auf diese Weise im Laufstreifen abgebildet wird. Im Anschluß daran wird der Reifen vulkanisiert.

Bei derartigen herkömmlichen Verfahren, erfährt der Gürtel während der Resterhebung in der Formpresse bei der Erzeugung von Laufflächenprofilen mit im wesentlichen in Umfangsrichtung ausgebildeten Profilrillen im axialen Bereich der Umfangsprofilrillen einen höheren, der Erhebung entgegenwirkenden Widerstand durch das Laufflächenkautschukmaterial als in den benachbarten axialen Profilbereichen mit hohen Profilanteilen. In diesen Bereichen mit hohen Profilanteilen kann das Laufflächenkautschukmaterial unmittelbar nach außen in die in der Form entsprechend ausgebildeten Profilvertiefungen gedrückt werden.

Im Bereich der Laufflächenumfangsrillen weist die Form entsprechende Umfangsrippen auf, die einem radialen Entweichen des Kautschukmaterials entgegenwirken. Aufgrund der hierdurch der Gürtelausdehnung in der Reifenform während der Erhebung unterschiedlich entgegenwirkenden Widerstände wird der Gürtel unterschiedlich verformt. In den axialen Bereichen mit hohen Laufflächenprofilanteilen wird der Gürtel nach radial außen gepreßt, während er in den Bereichen mit zu erzeugenden Profilumfangsrillen aufgrund des hohen der Erhebung entgegenwirkenden Widerstandes nur wesentlich geringere Ausdehnung erfährt. Auf diese Weise kann der Gürtel bei herkömmlichen Fahrzeugluftreifen mit ausgeprägten Profilumfangsrillen in axialer Richtung unerwünscht stark wellenförmig ausgebildet werden.

Im drucklosen vulkanisierten fertiggestellten Reifen bemüht sich der Gürtel, die Wellenform auszugleichen. Dabei verkrümmen sich die Profilelemente des Laufstreifens, so daß sie konkave Formen mit angehobenen Profilrändern annehmen. Hierdurch entstehen Druckspitzen in den Profilklotzkanten und ungleichförmiger Abrieb.

Aus der DE-3 850 643 T2 ist es bekannt, durch Aufbau eines Gürtels auf eine Trommel mit einer Trommeloberfläche mit konvexer Krümmung die Durchmesser des Gürtels im radial äußeren Bereich während des Aufbaus kleiner auszubilden als im radial mittleren Bereich. Hierdurch wird die Schulterpartie des Gürtels fester angebunden.

Eine unerwünscht stark ausgeprägte wellenförmige Ausbildung des Gürtels während der Erhebung in der Formpresse zur Erzeugung eines Laufflächenprofils mit Umfangsrillen ist auch hier möglich.

Der Erfindung liegt die Aufgabe zugrunde, der Ausprägung von einer Wellenform des Gürtels in axialer Richtung während der Erhebung bei der Erzeugung eines Laufflächenprofils mit Profilumfangsrillen entgegenzuwirken.

Erfindungsgemäß wird die Aufgabe durch das Verfahren gemäß den Merkmalen von Anspruch 1 sowie durch die Ausbildung einer Gürteltrommel gemäß den Merkmalen von Anspruch 5 gelöst. Durch eine vorgegebene wellenförmige Ausbildung des Gürtels beim Auflegen des Gürtels mit größerem Gürteldurchmesser im Bereich einer Profilumfangsrille des zu erzeugenden Laufflächenprofils als im axial benachbarten Bereich mit dort ausgeprägten Profilelementen in der Lauffläche und durch anschließendes festes Einschnüren mit Hilfe des Bandagematerials erhält das Laufflächenpaket zunächst eine Gürtelkontur, die der üblicherweise während der Expansion bei der Erhebung erzeugten Gürtelkontur entgegengerichtet ist. In den Bereichen mit geringerer radialer Expansion im Bereich der Laufflächenumfangsrille, erhält der Gürtel somit bereits vor der Erhebung einen radial größeren Durchmesser als im Bereich großer Expansion während der Erhebung. Im Bereich hoher Profilanteile erhebt sich der Gürtel aufgrund des dort geringeren Widerstandes während der Erhebung stark. Der zunächst geringere Durchmesser des Gürtels erfährt hier eine große Erhebung und somit eine große Durchmesserzunahme. Die zunächst mit großem Durchmesser ausgebildeten Gürtelbereiche unterhalb der zu erzeugenden Umfangsrillen erfahren aufgrund des großen Widerstands eine geringe Erhebung in der Form und somit nur eine geringe Durchmesserzunahme. Durch diese Überlagerung der unterschiedlichen Expansion der axialen Gürtelbereiche während der Erhebung in der Form mit den bei der Bildung des Gürtels erzeugten unterschiedlichen Durchmesser erfolgt eine weitgehende Eliminierung der unterschiedlichen erzeugten Gürteldurchmesser. Der Durchmesserverlauf des Gürtels in axialer Richtung ist somit bereits nach Vulkanisation weitgehend vergleichmäßigt. Die Gefahr von Deformationen des Gürtels im fertigen Reifen zur Vergleichmäßigung der Gürtelkontur wird minimiert, Druckspitzen in Profilklotzkanten werden reduziert, das Abriebverhalten verbessert.

Die Gürteltrommel mit unterschiedlich ausgebildeten Trommelkonturen, deren Durchmesser im Bereich der zu erzeugenden Umfangsrillen in der Lauffläche größer ausgebildet ist als in den benachbarten Gürtelbereichen, ermöglicht die Überlagerung der bei der Erhebung in der Form unterschiedlichen axialen Erhebungen des Gürtels mit den diesen entgegengerichteten auf der Gürteltrommel unterschiedlich erzeugten Gürteldurchmessern. Der Gürtel erhält somit nach der Erhebung in der Formgebung einen inaxialer Richtung weitgehend vergleichmäßigten Durchmesserverlauf.

Bevorzugt wird ein Verfahren zur Herstellung eines Fahrzeugluftreifens gemäß den Merkmalen von Anspruch 2, bei dem das Gürtelpaket mit Gürtel, Gürtelbandage und Laufstreifen auf einer konturierten Gürteltrommel mit zumindest im axialen Bereich einer zu erzeugenden Umfangsrille im Laufflächenprofil im wesentlichen größer ausgebildet ist als in den anderen axialen Bereichen bevor es nach Entfernung von der Gürteltrommel konzentrisch mit dem vorgefertigten Karkassenpaket durch Bombage verbunden wird. Die Herstellung des derart konturierten Gürtelpakets auf einer konturierten Gürteltrommel ist besonders einfach und zuverlässig zu verwirklichen. Die Konturen können genau dem gewünschten Laufflächenprofil durch eine entsprechend konturiert ausgebildete Gürteltrommel angepaßt und Fahrzeugreifen mit gleicher Gürtelqualität reproduziert werden.

Bevorzugt wird der Gürtel im Bereich aller Umfangsrillen mit erhöhtem Durchmesser ausgebildet. Vorteilhafterweise wird der Gürtel im Bereich breiter Profilumfangsrillen des Laufflächenprofils mit größeren Durchmessern als im Bereich mit schmaleren Profilumfangsrillen ausgebildet. Hierdurch kann auch der unterschiedlich starke Widerstand gegen axiales Ausweichen des Kautschukmaterials bei unterschiedlich breit ausgebildeten Umfangsrillen berücksichtigt und die dadurch bedingten Gürtelwellungen reduziert werden.

Die Erfindung wird anhand der in den Figuren 1 - 4 dargestellten Ausführungsbeispiele näher erläutert. Hierin zeigen:
- Fig. 1: Schematische Darstellung eines herkömmlichen Fahrzeugluftreifens
- Fig. 2: Schematische Darstellung eines auf einer herkommlichen konturierten Gürteltrommel erzeugten Gürtelpakets
- Fig. 3: Schematische Darstellung zur Erzeugung des Gürtelpakets
- Fig. 4: Schematische Darstellung des erfindungsgemäß erzeugten Fahrzeugluftreifens nach Erhebung in der Vulkanisierform.

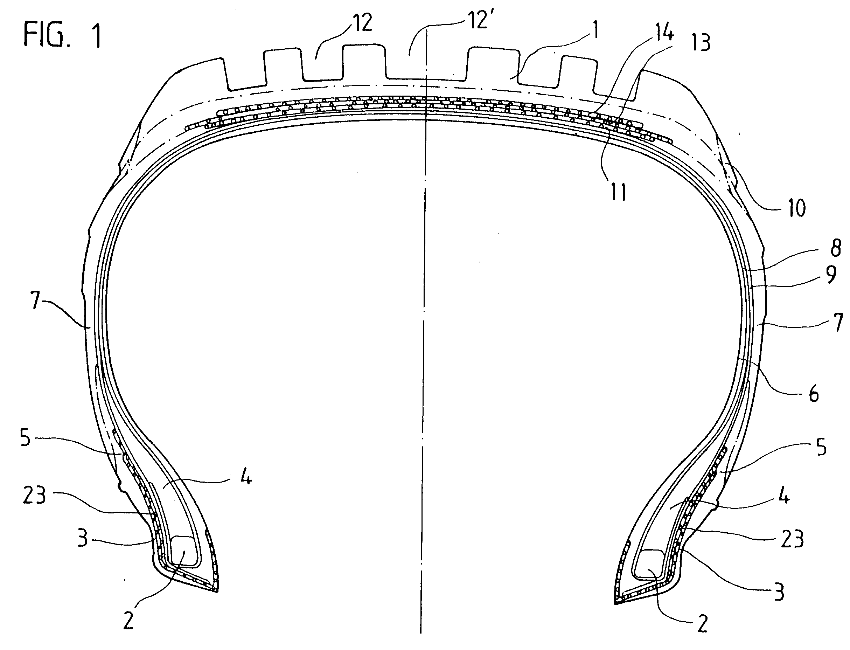

In Fig. 1 ist der Aufbau eines Fahrzeugluftreifens beispielhaft dargestellt, bei dem um einen Kern 2 mit Kernprofil 4 eine erste Karkassenlage 8 außerhalb einer dichten Innenschicht 6 über den rechten Schulterbereich und die Zenitebene zu dem linken Schulterbereich und dem linken Kern 2 mit Kernprofil 4 reicht, um den sie in herkömmlicher Weise gelegt ist. Über der ersten Karkassenlage 8 ist in herkömmlicher Weise eine zweite Karkassenlage 9 gelegt, die sich ebenfalls von der in Fig. 1 rechts dargestellten Seite des Reifens bis zur links dargestellten Seite erstreckt. In herkömmlicher Weise ist im Kernbereich über einen Wulststreifen 23 und den Wulstverstärker 3 ein Hornprofil 5 und von diesem ausgehend bis in den Schulterbereich reichend ein Seitenstreifen 7 aufgelegt. Über den Umfang des Reifens reichen außerhalb der Karkassenlagen radialer Bauart angeordnet mehrere Stahlgürtellagen 11, 13 mit in Kautschuk eingebetteten Stahlkorden und eine Gürtelbandage 14 mit in Umfangsrichtung verlaufenden Nyloncorden. Im Schulterbereich sind zusätzlich Schulterstreifen 10 aufgelegt. Den Abschluß des Reifenaufbaus bildet in bekannter Weise ein Laufstreifen 1 mit ausgeprägten Umfangsrillen 12.

Der Reifen wird in einem zweistufigen Verfahren hergestellt, bei dem zunächst das Karkassenpaket aus Innenschicht 6, Karkassenlagen 8, 9 und den Kernen 2 mit Wulstverstärker 3 in bekannter, nicht dargestellter Weise, aufgebaut wird. Das Gürtelpaket mit den Gürtellagen 11, 13, der Gürtelbandage 14 und dem Laufstreifen 1 wird unabhängig davon auf einer Gürteltrommel 15 in bekannter Weise aufgebaut und nach Entfernen von der Gürteltrommel in bekannter, nicht dargestellter Weise axial über das Karkassenpaket radial außerhalb konzentrisch zur Karkasse angeordnet. Durch radiale Expansion der Karkasse werden Karkassenpaket und Gürtelpaket miteinander verbunden. Dabei wird die Reifentorusform erzeugt. Der fertiggestellte Reifenrohling wird in der Vulkanisationsmulde in bekannter Weise durch radiale Erhebung in die Form gepreßt und vulkanisiert. Durch den Preßvorgang erhält die Lauffläche ihre Profilierung. Die Umfangsrillen 12, 12' werden dabei durch entsprechend ausgebildete negative Rippen in der Vulkanisationsform erzeugt.

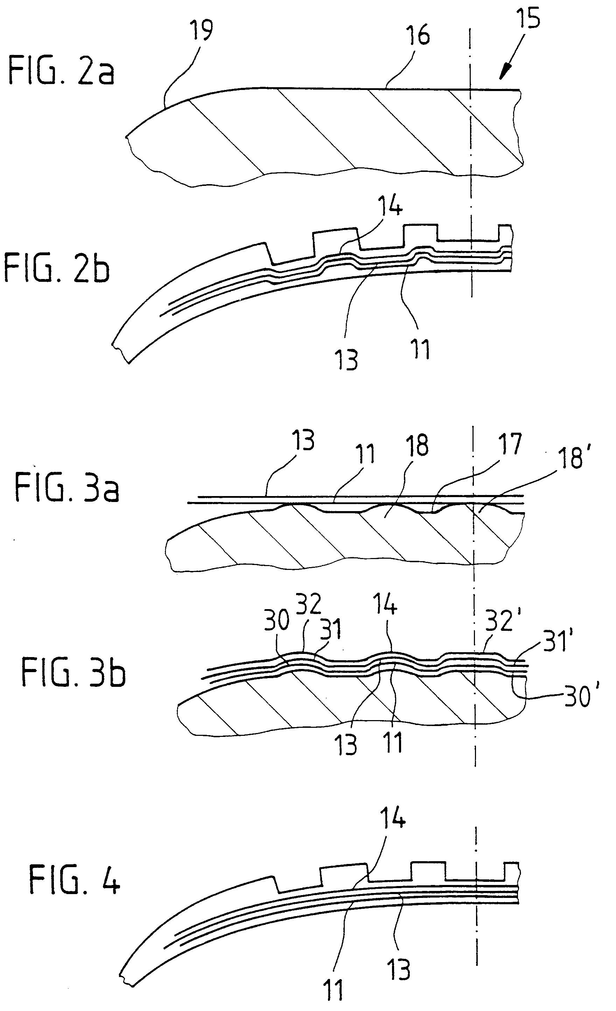

Fig. 2a zeigt eine herkömmliche Gürteltrommel 25 mit zylindrischer Oberfläche 16 und abgerundetem axialen Randbereich 19. Die auf einer solchen Gürteltrommel 25 aufgelegten Gürtellagen 11 und 13 erhalten auf der Gürteltrommel 25 ebenfalls der Gürteltrommelkontur entsprechend eine zylindrische Gürtelkontur mit abgerundeten Rändern. Diese Kontur behalten sie bis zur Erhebung in der Vulkanisationsform zur Abbildung des Profils in den Laufstreifen 1 bei. Dabei bilden sich, wie in Fig. 2b dargestellt ist, über den Umfang des Reifens reichende Vertiefungen in den Gürtellagen 11, 13 und in der Gürtelbandage 14 im Bereich der Umfangsrillen 12, 12'. Auf diese Weise erhält der Gürtel in einer Schnittebene durch den Reifen und durch die Reifenachse eine wellige Kontur, die er auch noch nach erfolgter Vulkanisation beibehält.

In Fig. 3a ist der Aufbau eines Gürtels auf einer Gürteltrommel 15 schematisch dargestellt, die eine teilzylindrische Oberfläche 17 aufweist, deren zylindrische Ausbildung durch über den Umfang der Gürteltrommel erstreckte Erhebungen 18, 18' unterbrochen ist. Die Gürtellagen 11 und 13 werden in herkömmlicher Weise auf die Gürteltrommel 15 aufgebaut. Mit Hilfe der Gürtelbandage 14 werden sie, beispielsweise durch entsprechende Wahl der Bandagespannung, fest an die Gürteltrommeloberfläche herangezogen, so daß die Gürtellagen 13 und 11 und die Gürtelbandage 14, wie in Fig. 3b dargestellt ist, in ihrer Kontur die Kontur der Gürteltrommel 15 annehmen. Falls zur gleichmäßigen Anlage des Gürtels an die Gürteltrommel erforderlich, ist es denkbar, im Bereich der Erhebungen 18, 18' eine geringere Wickelspannung für die Bandage zu wählen, als im übrigen Bereich der Gürteltrommel. Die Gürtellagen 11 und 13 und die Gürtelbandage 14 sind somit im wesentlichen zylindrisch ausgebildet, wobei die zylindrische Ausbildung im Bereich der Herhebungen 18, 18' der Gürteltrommel durch diese Erhebungen entsprechende über den Umfang reichende Erhebungen 30, 31, 32 bzw. 30', 31', 32' unterbrochen ist. Der Laufstreifen wird in bekannter, nicht dargestellter Weise auf die Gürtelbandage aufgelegt. Das so gebildete Gürtelpaket wird in bekannter Weise von der Gürteltrommel entfernt und auf der vorgefertigten Karkasse befestigt.

Die Gürtelerhebungen 18, 18' und somit die erzeugten Erhebungen der Gürtellagen und der Gürtelbandage 30, 31, 32, 30', 31', 32' sind in ihrer axialen Position so gewählt, daß die Erhebungen der Gürtellagen und der Gürtelbandage 30, 31, 32, 30', 31', 32' sich in der Formmulde der Vulkanisiereinrichtung in axialer Position an der Stelle der zur Erzeugung der Umfangsrillen 12, 12' vorgesehenen Umfangsrippen in der Form befinden. Durch radiale Erhebung des Reifenrohlings zur Abformung der Profilkontur in die Lauffläche werden die zylindrischen Bereiche der Gürtellagen 11, 13 und der Bandage 14 stärker radial nach außen gepreßt als die im Bereich der zu erzeugenden Umfangsrillen 12, 12' befindlichen erhobenen Bereiche 31, 32, 30, 31', 30', 32'. Wie in Fig. 4 dargestellt ist, wird die in der Vulkanisationsform erzeugte Kontur der Gürtellagen 11, 13 und der Gürtelbandage 14 auf diese Weise vergleichmäßigt.

Durch entsprechende konstruktive Ausbildung der Erhebungen 18, 18' in der Gürteltrommel können auf diese Weise die durch die Positivanteile der Vulkanisationsform zur Erzeugung von Profilnegativanteilen in der Lauffläche erzeugten Eindellungen der Gürtellagen sehr genau ausgeglichen werden. Beispielsweise kann, wie in Fig. 3a und 3b dargestellt ist, entsprechend der axialen Breite einer Umfangsrille die axiale Breite der Erhebung unterschiedlich stark ausgebildet werden. So ist im Bereich einer besonders breit ausgebildeten Umfangsrille 12' die Erhebung 18' breiter ausgebildet als die Erhebungen 18 im Bereich schmalerer Umfangsrillen 12. Ebenso kann die radiale Ausdehnung der Erhebungen, falls erforderlich, unterschiedlich stark ausgebildet werden. Es ist auch denkbar, statt der im Querschnitt kreisbogenförmig ausgebildeten Erhebungen trapezförmige Querschnitte der Erhebungen mit in radialer Richtung unter geringem Steigungswinkel ansteigenden Seitenflächen auszubilden.

### Bezugszeichenliste

- 1: Laufstreifen
- 2: Kern
- 3: Wulstverstärker
- 4: Kernprofil
- 5: Hornprofil
- 6: Innenschicht
- 7: Seitenstreifen
- 8: Karkassenlage
- 9: Karkassenlage
- 10: Schulterstreifen
- 11: Gürtellage
- 12: Umfangsrille
- 13: Gürtellage
- 14: Gürtelbandage
- 15: Gürteltrommel
- 16: zylindrische Oberfläche
- 17: teilzylindrische Oberfläche
- 18: Erhebung
- 19: Randbereich
- 23: Wulststreifen
- 25: Gürteltrommel
- 30: Erhebung
- 31: Erhebung
- 32: Erhebung

## Patentansprüche

1. Verfahren zur Herstellung eines Fahrzeugluftreifens mit Radialkarkasse, mit darauf aufgebautem Gürtel mit zumindest einer Gürtellage aus in Kautschuk eingebetteten Festigkeitsträgern und mit einer profilierten Lauffläche mit Profilumfangsrillen,
- bei dem zunächst jede Gürtellage (11, 13) im axialen Bereich zumindest einer Profilumfangsrille (12) mit einem größeren Durchmesser als in den anderen axialen Bereichen ausgebildet wird,
- bei dem danach um die radial äußere Gürtellage mit Bandagematerial (14) mit im wesentlichen in Umfangsrichtung angeordneten parallelen Festigkeitsträgern bandagiert und danach der Laufstreifen radial außerhalb des Bandagematerials (1) aufgelegt wird,
- und bei dem danach der aus zumindest einer Radialkarkasse, zwei Seitenteilen, dem Gürtel, der Gürtelbandage und dem Laufstreifen gebildete Reifenrohling in der Formpresse profiliert und vulkanisiert wird.

2. Verfahren zur Herstellung eines Fahrzeugluftreifens gemäß den Merkmalen von Anspruch 1,
- wobei der Gürtel auf einer konturierten Gürteltrommel(15) mit in axialer Richtung unterschiedlichem Trommeldurchmesser, wobei der Trommeldurchmesser im axialen Bereich zumindest einer Umfangsrille (12) im wesentlichen größer ausgebildet ist als in den anderen axialen Bereichen, aufgebaut wird und darauf radial außerhalb das Bandagematerial (14) und radial außerhalb des Bandagematerials der Laufstreifen (1) aufgelegt wird,
- bei dem das so erzeugte Gürtelpaket mit Gürtel, Gürtelbandage und Laufstreifen von der Gürteltrommel entfernt und konzentrisch radial außerhalb eines bereits vorgefertigten Karkassenpakets mit Karkasse und Seitenteilen angeordnet wird und im Anschluß daran durch Bombage mit dem Karkassenpaket verbunden wird.

3. Verfahren zur Herstellung eines Fahrzeugluftreifens gemäß den Merkmalen von Anspruch 1,
- bei dem jede Gürtellage (11, 13) mit im wesentlichen im axialen Bereich aller Umfangsrillen (12, 12') mit größerem Durchmesser als in den anderen Bereichen gebildet wird.

4. Verfahren zur Herstellung eines Fahrzeugluftreifens gemäß den Merkmalen von Anspruch 3,
- bei dem jede Gürtellage (11, 13) mit im wesentlichen im axialen Bereich von breiteren Umfangsrillen (12') mit größerem Durchmesser ausgebildet wird als im axialen Bereich von schmaleren Umfangsrillen (12).

5. Gürteltrommel zum Aufbau von Gürtellagen eines Fahrzeugluftreifens mit Gürtel- und Radialkarkasse,
- mit in axialer Richtung konturierter Gürteloberfläche, deren Trommeldurchmesser im wesentlichen im axialen Bereich von Umfangsprofilrillen der Reifenlauffläche des Fahrzeugluftreifens größer ausgebildet ist als in den anderen axialen Bereichen.
